# EUROPEAN PATENT APPLICATION

(11) **EP 4 685 695 A1**
(43) Date of publication of application: **28.01.2026**
(21) Application number: 24191184.1
(22) Date of filing: 26.07.2024
(51) Int. Cl.: G06N 3/00, B60L 1/00, G06N 20/00

(54) **METHOD FOR DETERMINING A DEPARTURE TIME, APPARATUS FOR DETERMINING A DEPARTURE TIME, USER DEVICE, VEHICLE, SYSTEM, COMPUTER PROGRAM**

(71) Applicant: Bayerische Motoren Werke Aktiengesellschaft, 80809 München (DE)
(72) Inventor: Homola, Daniel, 80335 München (DE)

(57) **Abstract**

Embodiments relate to a method (1; 50) for determining a departure time of at least one of a user and a vehicle (30; 41; 51). The method (1; 50) includes determining (2) a probability for the departure time with a trained machine-learning model. The trained machine-learning model uses as input at least the parameters "information about a previous trip" and "a user-specific or vehicle-specific feature determined based on a personalized identifier of a user or a vehicle (30; 41; 51)". The (1; 50) method further includes determining (3) the departure time based on the determined probability.

## Description

The present disclosure relates to the field of departure time prediction for planning a trip of a user.

It is generally known to anticipate when a user or a vehicle departs from a location. Such techniques may exemplarily be used for pre-conditioning a vehicle. For example, if a car interior is becoming hot due to being parked in the sun, an air-conditioning may be applied a certain time in advance before the driver returns to the car.

It is known to train a departure model for each user or vehicle individually on a user-specific or a vehicle-specific dataset.

However, it has been recognized that there may be a need for improved concepts of departure time determination, for example in order to scale to more users or vehicles and enable such an action as pre-conditioning. However, it should be noted that the present disclosure shall not be limited to that use-case of pre-conditioning.

It is an object of the present disclosure to provide a method for determining/predicting a departure time such that a prediction model can learn from more users or vehicles at the same time.

This demand may be satisfied by the subject-matter of the appended independent and dependent claims.

Embodiments are based on the finding that departure time determination for a particular user may be improved when a departure time model is trained on a (rather) general dataset.

Therefore, some embodiments pertain to a method for determining a departure time of at least one of a user and a vehicle. The method includes determining a probability for the departure time with a trained machine-learning model. The trained machine-learning model uses as input at least the following parameters: information about a previous trip and a user-specific and/or a vehicle-specific feature determined based on a personalized identifier of a user or a vehicle (e.g., the same or a different vehicle). Based on the probability, the departure time is determined (e.g., predicted).

Thereby, the present disclosure may provide a personalized departure time determination/prediction based on a general model (a model that is trained on a general dataset).

A general dataset may refer to a dataset that includes data from multiple users and/or vehicles (at the same time). Additional personalized features may be computed based on a personalized identifier in the general dataset. For example, another entity (which is at least partially distinct from the model) may use the personalized identifier for determining at least one personalized user/vehicle-specific feature which may be then input into the machine-learning model. Thereby, for example, the personalized feature(s) may be merged into the input of the machine-learning model.

In some embodiments, the departure time corresponds to the highest determined probability. However, the present disclosure is not limited in that regard. For example, the departure time may correspond to a point of time or to a time window. In case it corresponds to a time window, the length of the time window may also play a role in predicting the departure time. For example, if the time window is rather long, the probability may already be high due to the length of the time window.

In some embodiments, the machine-learning model is retrained during use. Thereby, it may be ensured that the model provides sufficient performance and deterioration (that may happen over time (e.g., due to different behavior of the user)) may be accommodated for.

In some embodiments, for the retraining, historical departure times are used as label. For example, the historical departure times may be restricted to certain times, such as the last week, the last month, or the like. In another example, if the user has holidays, historical departure times from their last holidays may be used instead of historical departure times that correspond to workdays.

In some embodiments, the retraining is triggered when it is determined that a performance of the trained machine-learning model is below a predetermined threshold. For example, if it has been recognized that the determination becomes imprecise or is wrong for a predetermined number of times (e.g., based on a ratio of correct and incorrect prediction), the retraining may be started. On the other hand, it may also be envisaged to retrain the machine-learning model periodically/continuously.

In some embodiments, the historical departure times that are chosen for the retraining are such that the performance remains above the predetermined threshold after the retraining is performed, as discussed herein.

In some embodiments, the trained machine-learning model further uses as input at least one of the following parameters:
- an average number of trips per day;
- a user cluster the user belongs to;
- an average start time of a trip;
- a location of the vehicle;
- a location cluster of the vehicle;
- a day of the week;
- a date; and
- a duration of the previous trip.

Thereby, the determination may be further improved.

In some embodiments, the method further includes: notifying the user of the determined departure time. Based on a reply of the user, the method may further include to perform an action.

In some embodiments, the action includes pre-conditioning the vehicle. Pre-conditioning may refer to a preparation for starting the vehicle such that the vehicle has optimal conditions for starting a trip (also including user preferences, such as a seat position).

In some embodiments, the pre-conditioning includes at least one of controlling an interior temperature, a charging of a battery, a temperature of a battery, and determining a traffic status during an upcoming trip.

Some embodiments pertain to an apparatus for determining a departure time including processing circuitry configured to carry out any of the method discussed herein. Thereby, it may be possible to provide the machine-learning model on the circuitry to be accessible to the user.

In some embodiments, the trained machine-learning algorithm is provided on the processing circuitry, as discussed herein.

Some embodiments pertain to a user device including the apparatus discussed herein.

Some embodiments pertain to a vehicle including the apparatus discussed herein.

Some embodiments pertain to a system including a user device, a vehicle, and a remote server, the system comprising the apparatus discussed herein.

Thus, there may be different variations on what entity the apparatus may be provided in and what entity performs the methods discussed herein.

Some embodiments pertain to a computer program having a program code for performing one of the methods discussed herein, when the computer program is executed on a computer, a processor, or a programmable hardware component
Some examples of apparatuses, methods and/or computer programs will be described in the following by way of example only, and with reference to the accompanying figures, in which:
Fig. 1 depicts a method for determining a departure time according to the present disclosure;
Fig. 2 depicts an apparatus for determining a departure time according to the present disclosure;
Fig. 3 depicts a user device according to the present disclosure;
Fig. 4 depicts a vehicle according to the present disclosure;
Fig. 5 depicts a system according to the present disclosure;
Fig. 6 depicts a diagram according to the present disclosure representing when a retraining of the ML model takes place; and
Fig. 7 depicts a method for determining a departure time according to the present disclosure.

Various example embodiments will now be described more fully with reference to the accompanying drawings in which some example embodiments are illustrated. In the figures, the thicknesses of lines, layers or regions may be exaggerated for clarity. Optional components may be illustrated using broken, dashed, or dotted lines.

Accordingly, while example embodiments are capable of various modifications and alternative forms, embodiments thereof are shown by way of example in the figures and will herein be described in detail. It should be understood, however, that there is no intent to limit example embodiments to the particular forms disclosed, but on the contrary, example embodiments are to cover all modifications, equivalents, and alternatives falling within the scope of the invention. Like numbers refer to like or similar elements throughout the description of the figures.

As used herein, the term "or" refers to a non-exclusive or, unless otherwise indicated (e.g., "or else" or "or in the alternative"). Furthermore, as used herein, words used to describe a relationship between elements should be broadly construed to include a direct relationship or the presence of intervening elements unless otherwise indicated. For example, when an element is referred to as being "connected" or "coupled" to another element, the element may be directly connected or coupled to the other element or intervening elements may be present. In contrast, when an element is referred to as being "directly connected" or "directly coupled" to another element, there are no intervening elements present. Similarly, words such as "between", "adjacent", and the like should be interpreted in a like fashion.

The terminology used herein is for the purpose of describing particular embodiments only and is not intended to be limiting of example embodiments. As used herein, the singular forms "a", "an" and "the" are intended to include the plural forms as well, unless the context clearly indicates otherwise. It will be further understood that the terms "comprises", "comprising", "includes", or "including", when used herein, specify the presence of stated features, integers, steps, operations, elements or components, but do not preclude the presence or addition of one or more other features, integers, steps, operations, elements, components or groups thereof.

Unless otherwise defined, all terms (including technical and scientific terms) used herein have the same meaning as commonly understood by one of ordinary skill in the art to which example embodiments belong. It will be further understood that terms, e.g., those defined in commonly used dictionaries, should be interpreted as having a meaning that is consistent with their meaning in the context of the relevant art and will not be interpreted in an idealized or overly formal sense unless expressly so defined herein.

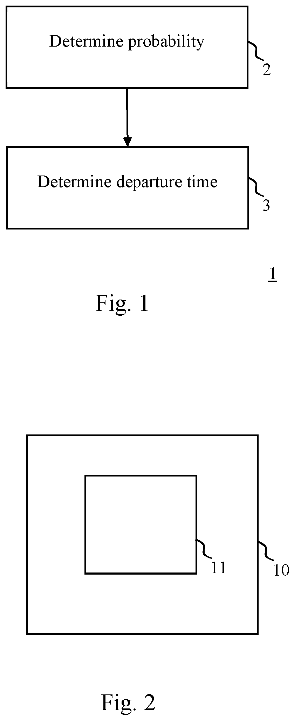

Returning to Fig. 1, a method for determining a departure time 1 is depicted. As indicated above, the departure time of a user and/or a vehicle is determined. It should be noted that, although the present disclosure is mainly described with reference to a vehicle, the present disclosure is not limited in that regard. For example, the principles of the present disclosure may also be applied when a user is walking. On the other hand, according to the present disclosure, it may be determined which type of transportation a user chooses. A vehicle may include any type of transportation a user may choose, such as a car, a boat, a bike (e.g., motorbike or bicycle), a plane, or the like. Moreover, electric vehicles, combustion engine driven vehicles, hybrid vehicles, and the like shall be covered by the principles of the present disclosure.

The method includes, at 2, determining a probability for the departure time with a trained machine-learning model.

A machine-learning (or machine-learned) model may refer to a data structure and/or set of rules representing a statistical model that is used to determine the probability. The data structure and/or set of rules represents learned knowledge (e.g. based on training performed by a machine-learning algorithm). In machine-learning, instead of a rule-based transformation of data, a transformation of data may be used, that is inferred from an analysis of training data.

The machine-learning model may be trained based on a machine-learning algorithm. The term "machine-learning algorithm" denotes a set of instructions that are used to create, train or use a machine-learning model. For the machine-learning model to determine the departure time, the machine-learning model may be trained using training data, as commonly known. By training the machine-learning model with a large set of training data and associated training information, the machine-learning model "learns" to determine the departure time. By training the machine-learning model using training information on departure times, the machine-learning model "learns" a transformation between training input data (e.g., labels) and the probability and/or the departure time.

The machine-learning model may be trained using training input data (e.g., information about an end of a previous trip and a start of a next/current trip). For example, the machine-learning model may be trained using a training method called "supervised learning". In supervised learning, the machine-learning model is trained using a plurality of training samples, wherein each sample may include a plurality of input data values, and a plurality of desired output values, i.e., each training sample is associated with a desired output value. By specifying both training samples and desired output values, the machine-learning model "learns" which output value to provide based on an input sample that is similar to the samples provided during the training. For example, a training sample may include input data that is based on historic data, such as previous departure times and previous end times of trips.

Apart from supervised learning, semi-supervised learning may be used. In semi-supervised learning, some of the training samples lack a corresponding desired output value. Supervised learning may be based on a supervised learning algorithm (e.g. a classification algorithm, a discriminative learning algorithm, a similarity learning algorithm, or the like). Classification algorithms may be used as the desired outputs of the trained machine-learning model are restricted to a limited set of values (categorical variables), i.e., the input is classified to one of the limited set of values. Similarity learning algorithms are similar to classification algorithms but are based on learning from examples using a similarity function that measures how similar or two related objects are. For example, an XGBoost (extreme gradient boosting) algorithm may be used for determining the departure time according to the present disclosure, without limiting the present disclosure in that regard.

Apart from supervised or semi-supervised learning, unsupervised learning may be used to train the machine-learning model. In unsupervised learning, (only) input data are supplied and an unsupervised learning algorithm is used to find structure in the input data (e.g. by grouping or clustering the input data, finding commonalities in the data). Clustering is the assignment of input data including a plurality of input values into subsets (clusters) so that input values within the same cluster are similar according to one or more (pre-defined) similarity criteria, while being dissimilar to input values that are included in other clusters.

Reinforcement learning is a third group of machine-learning algorithms. In other words, reinforcement learning may be used to train the machine-learning model. In reinforcement learning, one or more software actors (called "software agents") are trained to take actions in an environment. Based on the taken actions, a reward is calculated. Reinforcement learning is based on training the one or more software agents to choose the actions such that the cumulative reward is increased, leading to software agents that become better at the task they are given (as evidenced by increasing rewards).

Furthermore, additional techniques may be applied to some of the machine-learning algorithms. For example, feature learning may be used. In other words, the machine-learning model may at least partially be trained using feature learning, and/or the machine-learning algorithm may include a feature learning component. Feature learning algorithms, which may be called representation learning algorithms, may preserve the information in their input but also transform it in a way that makes it useful, often as a pre-processing step before performing classification or predictions. Feature learning may be based on principal components analysis or cluster analysis, for example.

For example, the machine-learning model may be an Artificial Neural Network (ANN). ANNs are systems that are inspired by biological neural networks, such as can be found in a retina or a brain. ANNs include a plurality of interconnected nodes and a plurality of connections, so-called edges, between the nodes. There are usually three types of nodes, input nodes that receive input values (e.g., end of previous trip), hidden nodes that are (only) connected to other nodes, and output nodes that provide output values (e.g., a (future) departure time). Each node may represent an artificial neuron. Each edge may transmit information from one node to another. The output of a node may be defined as a (non-linear) function of its inputs (e.g. of the sum of its inputs). The inputs of a node may be used in the function based on a "weight" of the edge or of the node that provides the input.

The weight of nodes and/or of edges may be adjusted in the learning process. In other words, the training of an ANN may include adjusting the weights of the nodes and/or edges of the ANN, i.e., to achieve a desired output for a given input.

Alternatively, the machine-learning model may include a different structure and, e.g., be a support vector machine, a random forest model or a gradient boosting model. Alternatively, the machine-learning model may be based on a genetic algorithm, which is a search algorithm and heuristic technique that mimics the process of natural selection.

In examples, the machine-learning model may be a combination of any of above examples.

The machine-learning model according to the present disclosure uses information about a previous trip and a user-specific and/or vehicle-specific feature determined based on a personalized identifier (e.g., a user number/ID) of the user/vehicle as an input and uses these parameters for determining the probability for the departure time. If an identifier (ID) of a vehicle is used, the vehicle may be the same or a different vehicle as the one for which the prediction is carried out. For example, if the user has multiple vehicles, it may be determined that the user uses another vehicle for the next trip. Also, in the case of car-sharing, different vehicles for the same user may be provided. For example, if an allowed region of a first vehicle ends and the user has to change vehicles in order to drive further, the prediction may be made for the second vehicle but based on an ID of the first vehicle. If the method is carried out for predicting a departure time of a vehicle, a personalized identifier of a vehicle (the same or different vehicle) and/or of a user (using the vehicle) may be used. If the method is carried out for predicting a departure time of a user, a personalized identifier of the (same) user and/or of a vehicle that is associated with the user may be used. It should be noted that the case of "one-user-to-many-vehicles" and "one-vehicle-to-many-users" shall also be envisaged according to the present disclosure.

Based on any of the IDs, user-specific and/or vehicle-specific features may be input into the machine-learning model.

The information about the previous trip may include at least one of a time when the previous trip has ended, a location where the previous trip has ended, a start time of the previous trip, a duration of the previous trip, a route of the previous trip, or the like. Other features are also described herein which may additionally or alternatively be applied in this context.

At 3, the method further includes determining the departure time based on the determined probability. For example, the time with the highest probability may (directly) correspond to the departure time, but the present disclosure is not limited in that regard. For example, the machine learning model may output discrete time windows of a predetermined length (e.g., five minute time windows), but the user may be notified in fifteen minutes time windows. Hence, the probability may be translated into an actual departure time based on the use case.

In an example, the machine-learning model is retrained during use. For example, a retraining may be triggered when it is determined that a performance of the model is below a predetermined threshold. The retraining may be based on the same model as the original or previous training, but a different model may be used alternatively. In such a retraining, as discussed herein, historical data may be used (e.g., previous ends of trips and previous starts of trips, as labels), but the historical data may be chosen differently than for the previous training since otherwise, the same bad-performing model may be obtained. The historical data may be confined to a predetermined time span or predetermined occasion, such as the last two weeks, the last month, a previous holiday, previous workdays, or the like.

In an example, the trained machine-learning model further uses as input at least one of the following parameters (or user/vehicle-specific features that are determined based on the personalized identifier): an average number of trips per day; a group that the user (or vehicle) belongs to; an average start time of a trip; a location of the user/vehicle; a location cluster of the user/vehicle; a day of the week; a date of the year; and a duration of the previous trip. Also, the personalized identifier may be an input parameter, in some embodiments.

For example, if an average number of trips per day (of the user or the vehicle) is used as an input parameter, it may be determined whether this number (e.g., also taking into account a standard deviation) has already been reached such that the probability may be determined accordingly. If the average number has not been reached, the probability for another trip may be higher than when the average number has already been reached.

The determination/prediction may further be enhanced if user clusters are used. For example, it may be determined to which group (cluster) the user belongs and the machine-learning model may take this into account. Similarly, location clusters may be used, e.g., based on coordinates, as will be described further below in connection with feature engineering.

For example, if an average start time of a trip is taken into account, the probability may be high around that average start time.

The location of the vehicle may indicate whether it is likely that the vehicle leaves the location. If the vehicle is not at a home address, it may be likely that the vehicle returns to the home address at a certain time. On the other hand, if the vehicle is at the home address, it may be like that the vehicle leaves for work at a certain time. The present disclosure is not limited to the embodiments of home address and work address and any location may be envisaged according to the present disclosure, such as addresses of relatives and friends, popular holiday goals, a gym, or the like.

A day of the week may, for example, indicate whether it is likely that the vehicle will leave for a predetermined place (e.g., to work at the next day).

More general than a day of the week, a calendar date may be used as input parameter. For example, in holiday season (e.g., Christmas), departure times and destinations may be different than during the working days.

A duration of a previous trip may also have an influence on the departure time. For example, if the user is tired from driving, it may be less likely that they already start another trip within the next few hours.

In some examples, the method further includes notifying the user of the determined departure time and performing an action based on the notification.

For example, the action may include pre-conditioning the vehicle based on the determined departure time. For example, the pre-conditioning may include at least one of controlling an interior temperature, a charging of a battery, a temperature of a battery, and determining a traffic status during an upcoming trip. The present disclosure is not limited to any type of pre-conditioning and which pre-conditioning is carried out may also depend on the type of vehicle.

Fig. 2 depicts an apparatus 10 according to the present disclosure. The apparatus 10 includes processing circuitry 11 that is configured to carry out the methods discussed herein.

For example, the processing circuitry 11 may be a single dedicated processor, a single shared processor, or a plurality of individual processors, some of which or all of which may be shared, a digital signal processor (DSP) hardware, an application specific integrated circuit (ASIC), a systemon-a-chip (SoC) a neuromorphic processor or a field programmable gate array (FPGA). The processing circuitry 11 may optionally be coupled to, e.g., memory such as read only memory (ROM) for storing software, random access memory (RAM) and/or non-volatile memory. For example, the apparatus 10 may include memory configured to store instructions, which when executed by the processing circuitry 11, cause the processing circuitry 11 to perform the steps and methods described herein.

The processing circuitry 11 is configured to apply a trained machine-learning algorithm to determine a probability, as discussed herein. The input data (or the parameters that are used for the algorithm) may be provided from various sources. For example, the input data may be received from a server, a computer, a vehicle, a mobile phone, or the like. The apparatus 10 may optionally include a receiver or a transceiver (not illustrated in Fig. 2) configured for (e.g., wireless or wired) reception of the input data. However, it is to be noted that the present application is not limited to the aforementioned examples. The input data may have an appropriate data format for the apparatus 10 (or the processing circuitry 11) to process.

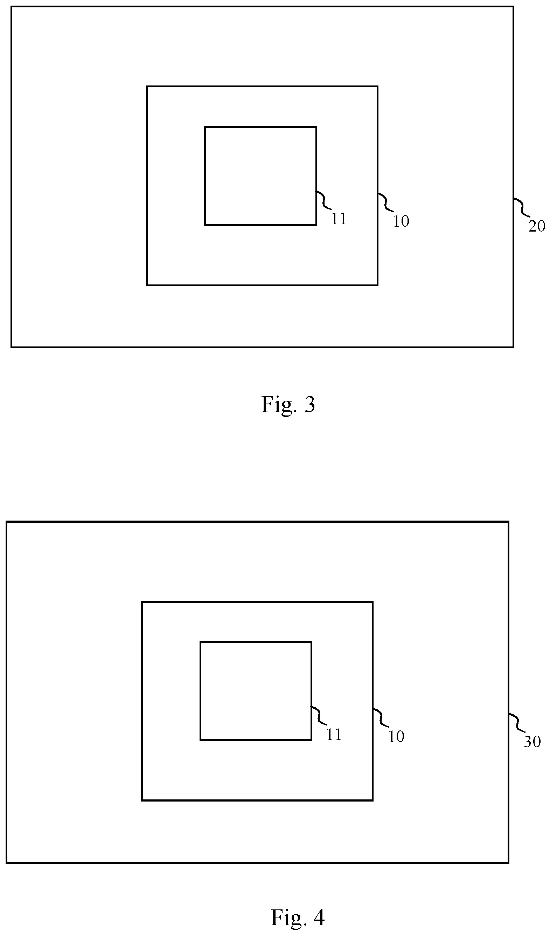

Fig. 3 depicts a user device 20 that includes the apparatus 10, as described under reference of Fig. 2.

The user device may include a handheld device, such as a smartphone, a laptop, a tablet, or the like. On the other hand, the user device may include a wearable device, such as a smartwatch, smart glasses, or the like. In some embodiments, the user device includes multiple devices which are distributed and which share functionalities, such as a smartwatch in connection with a smartphone, or the like.

Fig. 4 depicts a vehicle that includes the apparatus 10, as described under reference of Fig. 2. As discussed herein, the vehicle may include any type of vehicle, such as a car, a motorbike, or the like.

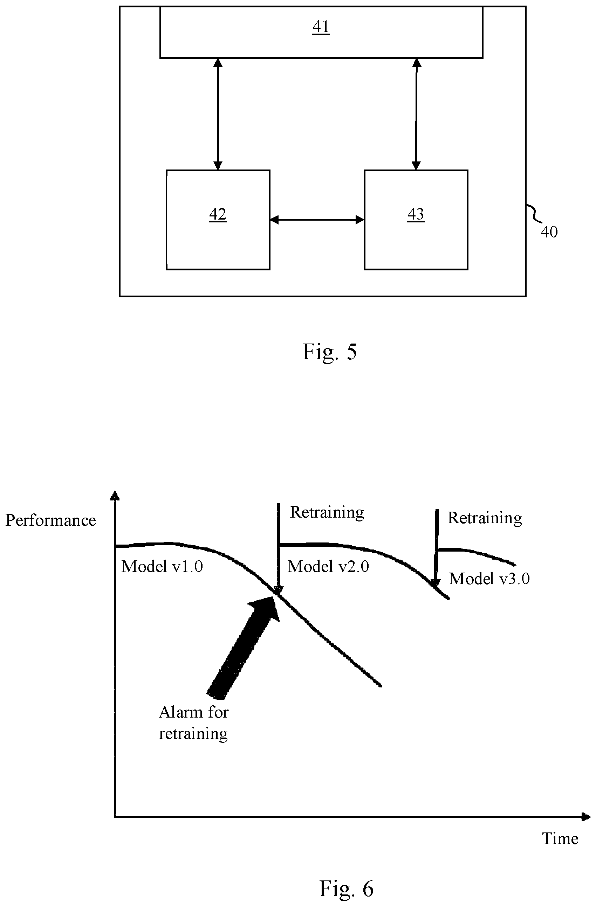

Fig. 5 depicts a system 40 according to the present disclosure. The system 40 includes a vehicle 41, a user device 42, and a server 43, which are all configured to communicate with each other. Principally, the method may be carried out on each of these devices, but in the following, it is assumed that the method is carried out on the server 43. Thus, the server uses the machine-learning model discussed herein. In order to do so, the vehicle 41 and/or the user device 42 transmit all the necessary input data to the server 43. When the server 43 has determined a departure time, a notification is sent to the vehicle 41, such that a pre-conditioning can be carried out. Moreover, a request is sent to the user device indicating that a future departure has been determined. The user can confirm or deny this request. In the case of denial, the pre-conditioning may be aborted (or not even started in the beginning). The reply of the user may already be taken into account for a retraining or for determining whether a retraining is necessary. For example, if the user denies the request, the prediction might have been wrong (or the user might not have been interested in such an interaction). Thus, a performance of the model might fall below a predetermined threshold such that a retraining may be necessary.

Fig. 6 depicts a diagram representing a model performance versus time. In this embodiment, the performance is determined as a ratio of correct predictions versus a number of all predictions. However, any other performance indicator may be used. As can be taken from Fig. 6, a first version of the machine learning model deteriorates over time. When a predetermined performance threshold is reached, retraining is triggered such that Model v2.0 performs better until it deteriorates similarly as v1.0. The deterioration may have different causes.

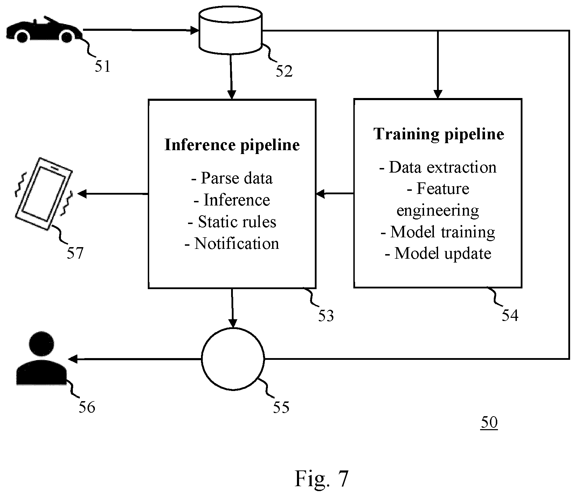

Fig. 7 depicts a method 50 for a machine-learning model according to the present disclosure. After an end of a trip, a vehicle 51 sends data about the trip to a database 52 which is configured to input the data into an inference pipeline 53 and a training pipeline 54. The training pipeline 54 is configured to update the departure model of the inference pipeline 53 when a retraining has been carried out. The inference pipeline 53 is, for example, configured to process model inference using static rules, e.g. a static rule of minimum probability to reach to send a notification to a user. A monitoring unit 55 is configured to evaluate a performance of the inference model (machine learning model for departure determination) and eventually send an alarm and/or trigger the training pipeline 54, if the performance has fallen below a predetermined threshold, as discussed herein. The alarm may be sent to a development team 56 to assess whether and how a retraining is to be performed. However, the retraining may be carried out automatically as well, based on predetermined data or based on a (different) machine learning model which is configured to train the methods discussed herein (e.g., based on transfer learning). The inference pipeline 53 is further configured to notify a user device 57 of a determined departure time, as discussed herein. Based on such a notification, a pre-conditioning may be initiated (e.g., if the user agrees to the predicted departure time and the pre-conditioning).

The training pipeline 54 may be configured for at least one of data extraction, feature engineering, model training, model update, or the like. For example, the data extraction may be based on a predetermined time span (e.g., based on the last month data, last two months, last year, or the like). If feature engineering is applied, a developer may predefine features according to which the model is trained with/updated. For example, trip features may be envisaged, such as length of a trip, an end timestamp, a day of the week the trip ends, whether the trip is on a weekend/holiday, or the like. Also, location features (e.g., based on GPS or any other positioning method) may be predefined, such as coordinates (latitude and/or longitude) of the end of the trip, a location cluster ID, a GPS cluster rank of the user/driver. Moreover, driver/user/vehicle features may be predefined, such as a trip count (e.g., total number of trips), an average number of trips per day, GPS clusters/coordinates that are frequently visited, average duration of a trip (e.g., during workdays or during the weekend/holiday), average working hours, average distance of a trip (on workdays or weekend/holiday), a driver cluster, or the like.

However, the above-mentioned features are not exhaustive and may depend on the circumstances and the specific use-case. For example, certain features may further be detailed. For example, the start of the trip may be taken into account and corresponding features that are associated with the start of the trip (e.g., start GPS cluster, or the like). Moreover, a driver profile may be established and time ranges for the driver may be predefined which indicate on which times the driver typically drives.

By recognizing/determining clusters or group that the driver belongs to (or other clusters), the determination may further be enhanced since the model may be tailored to the specific group/cluster. This may be due to the circumstance that the label scope and/or the user scope (or any other magnitude that is clustered) is reduced.

However, alternatively or in addition to the feature engineering, a user/vehicle vector/embedding may be carried out. That is, the machine-learning model may calculate (implicit) features for the user and/or the vehicle.

The training pipeline may apply the following exemplary method:
1. Use data of all users
2. Clean the data and reduce it into a selected period
3. Split into training, validation, and test datasets
4. Filter for users with minimum trips in training and validation
5. Feature engineering
6. Training on all users with minimum trips
7. Filter for users with higher precision
8. Training on all users with minimum trips and minimum precision

As stated above, the start of the next trip may be used as a label for the training.

In more general terms, some embodiments pertain to a method for training a machine-learning model to determine a departure time and/or to determine a probability for the departure time, the method including: applying a discriminative machine-learning model using a start of an upcoming trip as a label and using an end of a previous trip as input.

The methods discussed herein may be applied to the method for training the machine-learning model. Retraining may be carried out accordingly, but the present disclosure is not limited in that regard. For example, retraining may alternatively be carried out based on transfer learning, if it has been recognized that the performance would be enhanced.

According to the principles of the present disclosure, a model may be provided for many users that can reach a requested performance. Moreover, the scope of the problem may be reduced and a model may be trained for specific patterns/more predictable users.

### References

- 1; 50: Method for determining a departure time
- 2: Determine probability
- 3: Determine departure time
- 10: Apparatus for determining a departure time
- 11: Processing circuitry
- 20, 42, 57: User device
- 30,41,51: Vehicle
- 40: System
- 43: Server
- 52: Database
- 53: Inference pipeline
- 54: Training pipeline
- 55: Monitoring unit
- 56: Development team

## Claims

1. A method (1; 50) for determining a departure time of at least one of a user and a vehicle (30; 41; 51), the method comprising:
determining (2) a probability for the departure time with a trained machine-learning model, wherein the trained machine-learning model uses as input at least the following parameters:
- information about a previous trip; and
- a user-specific or vehicle-specific feature determined based on a personalized identifier of a user or a vehicle (30; 41; 51);
the method further comprising:
determining (3) the departure time based on the determined probability.

2. The method (1; 50) of claim 1, wherein the departure time corresponds to the highest determined probability.

3. The method (1; 50) of claim 1 or 2, wherein the machine-learning model is retrained during use.

4. The method (1; 50) of claim 3, wherein, for the retraining, historical departure times are used as label.

5. The method (1; 50) of claim 3 or 4, wherein the retraining is triggered when it is determined that a performance of the trained machine-learning model is below a predetermined threshold.

6. The method (1; 50) of claim 5 when dependent on claim 4, wherein the historical departure times that are chosen for the retraining are such that the performance remains above the predetermined threshold after the retraining is performed.

7. The method (1; 50) of anyone of claims 1 to 6, wherein the trained machine-learning model further uses as input at least one of the following parameters:
- an average number of trips per day;
- a group that the user belongs to;
- an average start time of a trip;
- a location of the vehicle;
- a location cluster of the vehicle;
- a day of the week;
- a date of the year; and
- a duration of the previous trip.

8. The method (1; 50) of anyone of claims 1 to 7, further comprising:
notifying the user of the determined departure time; and
performing an action based on the notification.

9. The method (1; 50) of claim 8, wherein the action includes pre-conditioning the vehicle (30; 41; 51), wherein the pre-conditioning includes at least one of controlling an interior temperature, a charging of a battery, a temperature of a battery, and determining a traffic status during an upcoming trip.

10. An apparatus (10) for predicting a departure time comprising processing circuitry (11) configured to carry out the method (1; 50) of anyone of claims 1 to 9.

11. The apparatus (10) of claim 10, wherein the trained machine-learning algorithm is provided on the processing circuitry (11).

12. A user device (20; 42; 57) comprising the apparatus according to claim 10 or 11.

13. A vehicle (30; 41; 51) comprising the apparatus according to claim 10 or 11.

14. A system (40) comprising a user device (20; 42; 57) , a vehicle (30, 41; 51), and a remote server (43), the system comprising the apparatus (10) of claim 10 or 11.

15. A computer program having a program code for performing one of the methods of claims 1 to 9, when the computer program is executed on a computer, a processor, or a programmable hardware component.
